# EUROPEAN PATENT SPECIFICATION

(11) **EP 4 057 134 B1**
(45) Date of publication and mention of the grant of the patent: **14.02.2024**
(21) Application number: 21162156.0
(22) Date of filing: 11.03.2021
(51) Int. Cl.: G06F 9/445, G06F 11/30, G06F 11/34, G06F 9/455

(54) **CONTROL LOOPS FOR AUTOMATED NETWORK MANAGEMENT**
REGELSCHLEIFEN ZUR AUTOMATISIERTEN NETZWERKVERWALTUNG
BOUCLES DE COMMANDE POUR GESTION AUTOMATIQUE DE RÉSEAU

(43) Date of publication of application: 14.09.2022
(73) Proprietor: Ericsson Software Technology AB, 164 83 Stockholm (SE)
(72) Inventor: FALLON, Liam, Athlone County Westmeath (IE)
(74) Representative: Haseltine Lake Kempner LLP

(56) References cited:
- US-A1- 2017 102 694
- US-A1- 2018 260 745
- US-A1- 2020 014 581

## Description

### BACKGROUND

As telecommunication networks become increasingly complex, it becomes difficult, if not impossible, to effectively manage these networks using traditional approaches relying on human monitoring and intervention to ensure that they operate within desired bounds. Automated network management has therefore been the subject of considerable interest, and different approaches based on workflows, network slicing, and control loops have been developed. These are briefly discussed below.

The use of Business Process Model and Notation (BPMN) combined with a workflow engine such as Camunda is a common mechanism for developing and implementing automation processes. Such systems often feature an advanced design time software development kit (SDK) and environment with a sophisticated user interface. They also feature a deployment server, which can run automation processes developed in the design environment. Such systems are highly customizable, allowing both design time plugins and run time plugins to be developed and used to design and run custom elements in workflows.

However, workflow based processes are initiated on a "run to completion" basis, meaning that they execute from beginning to end. This means that, while a workflow process may be monitored and recorded, it is triggered, it executes, and it completes. Furthermore, a type of workflow, or type of individual runs of a workflow, is not modelled or managed as a federated executing entity. The components of a workflow are blocks in the flow and they execute in sequence or in parallel one after another, with each component starting execution and completing execution as it is reached in the workflow. Moreover, the lifecycle of a workflow is not managed, and while a workflow can be envisaged as being deployed in a system, the life cycle of individual runs or executions of a workflow are not managed.

Network slicing is an approach in which networking resources are made available for use for communication services, and they can be combined to provide partitioned end-to-end telecommunication services across those resources. The 3GPP TS 28.530 document defines a network architecture where network functions can offer partitioned resources, and those resources can be linked together to offer communication services. A management view is provided to allow communication services to be created or torn down on demand.

Although network slicing is useful for establishing and tearing down communication services based on offered resources, it is a heavyweight networking concept and the 3GPP TS 28.530 implementation approach is too unwieldy to be applied to the management of apps. Also, the process of defining, deploying, and instantiating a network slice from a model is complex and no single model-based approach for defining and spinning up entities in a slide exists. It is complex to define and implement a component that participates in a network slice as a resource, since the 3GPP standards must be implemented on the component that provides the resource. Moreover, there is no mechanism for allowing the configuration of a network slice resource provider to be embedded in a slice design time system.

Control loops offer an attractive alternative to approaches based on workflows and network slicing.

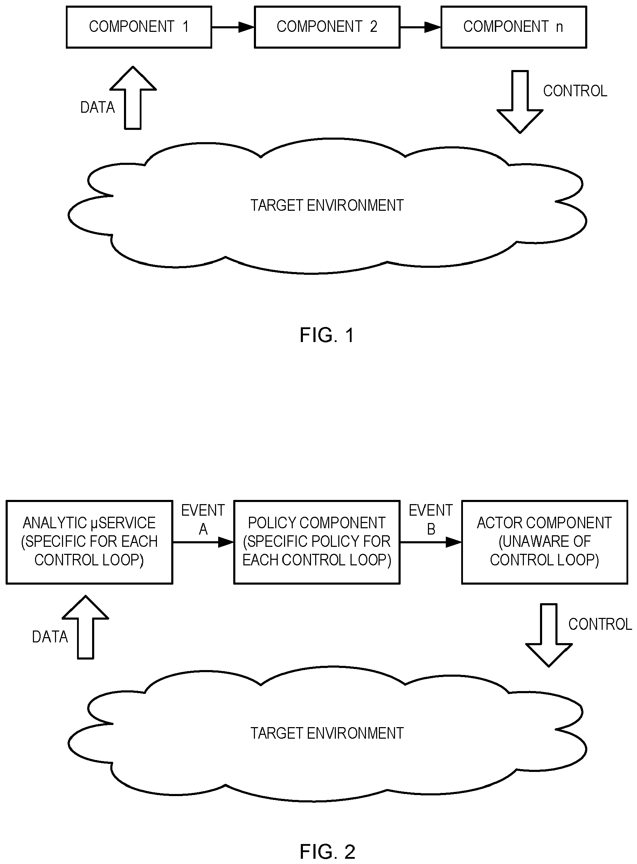

Figure 1 schematically illustrates a basic control loop in a telecommunication management system. At its most basic, the control loop is a set of components that are chained together to examine data from a target environment being managed, to gain insights on that data, and to decide what control actions (if any) should be made on the target environment to improve it.

Figure 2 schematically illustrates how control loops are implemented in a telecommunication management system such as the Open Network Automation Platform (ONAP). The components of the control loop include an analytic microservice, a policy component, and an actor component (also referred to herein simply as an "actor"). The analytic microservice examines data coming from the target environment. The microservice is designed and configured to analyse the data and, if certain conditions are met, it delivers an insight in the form of an event ("Event A"). For example, the microservice may be monitoring certain statistics coming from the target environment and may send an insight event when the value of those statistics exceeds or drops below a certain threshold.

The arrival of Event A triggers the policy for the control loop. The policy decides if the insight contained in Event A merits a network change. When arriving at its decision, the policy may look for more information such as whether or not changes are allowed at that time of day, whether or not changes are enabled on the network, whether the control loop has authority to make changes in that zone of the network, and whether a recent change has already been submitted to the network. If the policy decides to act on the insight, it sends a request in the form of an event ("Event B") to the appropriate actor component to execute the required control commands on the network.

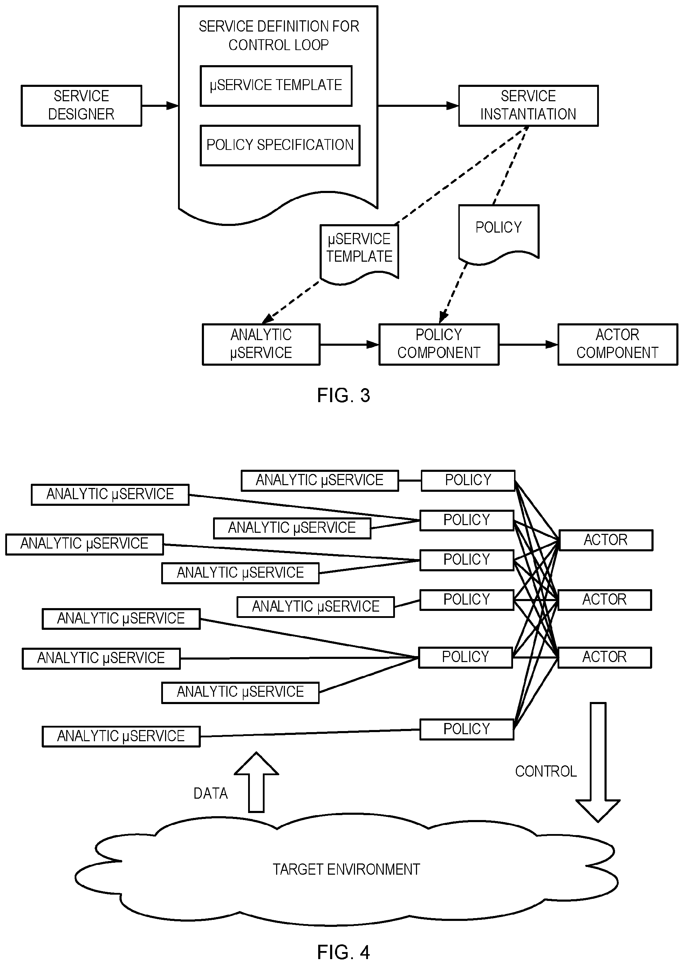

Figure 3 schematically illustrates how control loops are instantiated in systems such as ONAP. A service designer component packages a microservice template and a policy specification into a service definition artefact. The service instantiation component unpacks the service definition artefact. It then stores the policy for the control loop onto the policy component. Finally, it instantiates the microservice using the information in the microservice template. The microservice template is an artefact that specifies the parameters required to spin up the microservice and the configuration information for the microservice itself.

Figure 4 schematically illustrates a system running with ten two-stage control loops, where some control loops are sharing policy engines and where policies are sharing actors. The interactions that exist when the system instantiates these control loops using the approach described in Figure 3 are represented by the connecting lines.

However, in conventional systems such as those described above with reference to Figures 3 and 4, there is no management of the control loop, i.e., the control loop is defined ad hoc as three components, and once the components are instantiated it is no longer possible to manage the interaction between those components as a control loop.

Reference may be made to US 2018/260745 A1 which discloses a system and method for designing and executing control loops in a cloud environment; US 2017/102694 A1 which discloses a distributed industrial performance monitoring and analytics platform; and US 2020/014581 A1 which discloses a self-adjusting control loop.

### SUMMARY

The present invention is defined by the appended claims. According to examples disclosed herein, a control loop manager device comprises: a processor; and a memory storing machine readable instructions that, when executed by the processor, cause the processor to: acquire a control loop definition that includes: (i) a structural definition of a model of a control loop having a plurality of control loop components, and (ii) metadata to configure a plurality of actual control loop components, which correspond to the plurality of control loop components of the model, to participate in an actual control loop corresponding to the control loop of the model, and create the actual control loop in a telecommunications management system based on the control loop definition.

The term "actual" is used herein to refer to control loops and control loop components that are created and exist in a telecommunications management system, as opposed to control loops and control loop components that are created and exist in a model. Where this distinction is not explicitly mentioned, it will be apparent from the context whether the actual or modelled control loops and control loop components are being referred to.

According to examples disclosed herein, control loop administration is supported. That is, control loops may be deployed, initiated, activated, monitored, deactivated, de-initiated, and/or removed. Furthermore, there may be common mechanisms for components that implement and participate in control loops to use. The use of metadata provides flexibility compared to convention systems in which a new control loop type must be hard coded and connected using well known addresses and naming conventions; only the parameterization and initiation of hard coded control loop types is typically supported in conventional systems.

In some examples, to create the actual control loop, the instructions may cause the processor to: transmit the metadata to a plurality of control loop agents, each control loop agent hosted on a respective one of the plurality of actual control loop components.

The transmission may be broadcast or individually transmitted. Control loop agents may register with the control loop manger device in advance.

In some examples, the instructions may further cause the processor to: transmit, to each of the control loop agents, a control request for controlling the respective actual control loop component.

In one example, the control request may be for changing an operational state of the respective actual control loop component. In another example, the control request may be for monitoring the respective actual control loop component.

For example, the request may be to change a state of the respective actual control loop component from an instantiated state to an active state. When in the active state, the request may be to monitor the respective actual control loop component. In the active state, the request may alternatively be to change the state from the active state to a deactivated state. When in the deactivated state, the request may be to change the state to a de-instantiated state.

For example, the instructions may cause the processor to activate the actual control loop by transmitting, to each of the control loop agents, a request to activate the respective actual control loop component. In another example, the instructions may cause the processor to monitor the activated control loop by transmitting, to each of the control loop agents, a request to monitor the respective actual control loop component, and receive monitored data from at least one of the control loop agents. In a further example, the instructions may cause the processor to deactivate the activated control loop by transmitting, to each of the control loop agents, a request to deactivate the respective actual control loop component. In yet another example, the instructions may cause the processor to de-instantiate the deactivated control loop by transmitting, to each of the control loop agents, a request to remove the respective control loop component from the control loop.

In some examples, the instructions are further to cause the processor to: store the control loop definition in a data repository, together with information indicating an operational state of the control loop and/or information indicating an operational state of the control loop components.

Thus, the state of control loops themselves can be managed, not just the state of the components implementing the control loops.

The data repository may be integrated as part of the control loop manager device or may be provided as a separate entity. In this regard, the term "data repository" may refer to any device, media, component, portion of a component, collection of components, and/or other structure capable of storing data accessible to a processor. Examples of data repositories contemplated herein include, but are not limited to, processor registers, on-chip storage, on-board storage, hard drives, solid state devices, fix media devices, removable media devices, logically attached storage, networked storage, distributed local and/or remote storage (e.g., server farms, "cloud" storage, etc.), media (e.g., solid state, optical, magnetic, etc.), and/or combinations thereof. The data repository is accessible to at least one processor but may be logically and/or physically detached from the processor during times when no processor has a present need for access. The data repository may be directly accessible or via one or more intervening components, including but not limited to, a cache and/or buffer. The data repository may be organized into a database, file, record, or other logical storage structure and/or portion or collection thereof.

According to examples disclosed herein, a control loop system comprises a control loop manager device configured to: acquire a control loop definition that includes: (i) a structural definition of a model of a control loop having a plurality of control loop components, and (ii) metadata to configure a plurality of actual control loop components, which correspond to the plurality of control loop components of the model, to participate in an actual control loop corresponding to the control loop of the model, and create the actual control loop in a telecommunications management system based on the control loop definition; and a plurality of control loop agents configured to communicate with the control loop manager, each control loop agent hosted on a respective one of the plurality of actual control loop components.

The described methods and devices may be applied to telecommunication management systems where network functions are implemented on physical nodes, executing in virtual machines, or executing as cloud native functions. In some examples, the actual control loop is created in a software container.

According to examples disclosed herein, a control loop designer device may comprise: a processor; and a memory storing machine readable instructions that, when executed by the processor, cause the processor to: generate a control loop definition based on a model of a control loop having a plurality of control loop components, wherein the control loop definition includes: (i) a structural definition of the model, and (ii) metadata to configure a plurality of actual control loop components, which correspond to the plurality of control loop components of the model, to participate in an actual control loop corresponding to the control loop of the model, and transmit the control loop definition to a control loop manager device as defined above.

Thus, control loops may be designed as control loops. Furthermore, control loops may be formally modelled in the system, and such control loops may be completely defined in a model. Moreover, parts of control loops can be added to a control loop at design time.

In some examples, the control loop components may comprise different types of control loop components, and the instructions may further to cause the processor to: run a plurality of plugins, each plugin corresponding to one of the different types of control loop components and enabling parameters of the corresponding control loop component to be defined. This use of plugins provides flexibility, allowing the control loop designer to be customized and updated.

Generally speaking, a computer model of a control loop may comprise data that defines of a plurality of control loop components, data that defines of an order in which the control loop components are to be invoked, data that defines messages to be passed between the control loop components, and metadata that enables the control loop components to participate in the control loop.

In some examples, the model of the control loop may comprise a graph having nodes and edges, each edge connecting two nodes, with the nodes representing the plurality of control loop components, and the edges representing events that pass between the plurality of control loop components. The graph may have a root node, at least one internal node, and at least one leaf node, wherein each internal node and each leaf node has only one incoming edge.

The described methods and devices may be applied to telecommunication management systems where network functions are implemented on physical nodes, executing in virtual machines, or executing as cloud native functions.

According to examples disclosed herein, a computer-implemented method may comprise: acquiring a control loop definition that includes: (i) a structural definition of a model of a control loop having a plurality of control loop components, and (ii) metadata to configure a plurality of actual control loop components, which correspond to the plurality of control loop components of the model, to participate in an actual control loop corresponding to the control loop of the model, and creating the actual control loop in a telecommunications management system based on the control loop definition.

According to examples disclosed herein, a computer-readable medium may have stored thereon machine-readable instructions that, when executed by a processor, cause the processor to: acquire a control loop definition that includes: (i) a structural definition of a model of a control loop having a plurality of control loop components, and (ii) metadata to configure a plurality of actual control loop components, which correspond to the plurality of control loop components of the model, to participate in an actual control loop corresponding to the control loop of the model, and create the actual control loop in a telecommunications management system based on the control loop definition.

For the devices, methods, and non-transitory computer readable media disclosed herein, modules, as described herein, may be any combination of hardware and programming to implement the functionalities of the respective modules. In some examples described herein, the combinations of hardware and programming may be implemented in a number of different ways. For example, the programming for the modules may be processor executable instructions stored on a non-transitory machine-readable storage medium and the hardware for the modules may include a processing resource to execute those instructions. In these examples, a computing device implementing such modules may include the machine-readable storage medium storing the instructions and the processing resource to execute the instructions, or the machine readable storage medium may be separately stored and accessible by the computing device and the processing resource. In some examples, some modules may be implemented in circuitry.

It is also envisaged that the control loop manager device may acquire the model of the control loop, rather than just a definition of the control loop. Thus, according to some examples, a control loop manager device may comprise a processor; and a memory storing machine readable instructions that, when executed by the processor, cause the processor to: acquire a file that includes (i) a model of a control loop having a plurality of control loop components, and (ii) metadata to configure a plurality of actual control loop components, which correspond to the plurality of control loop components of the model, to participate in an actual control loop corresponding to the control loop of the model, and create the actual control loop in a telecommunications management system based on the file.

It will be understood that the methods and techniques described herein relating to deploying, instantiating, activating, monitoring, deactivating, de-instantiating, and removing control loops may apply to an individual component of a control loop. Thus, the control loop definition comprizes an update of an existing control loop definition with one or more updated or new control loop components and corresponding metadata. The control loop manager may update the data repository. The control loop manager also updates the actual control loop in the telecommunication management system based on the updated control loop definition. The control loop agent instantiates and activates a new control loop component by transmitting metadata to a control loop agent hosted on that new control loop component. In this way, the new control loop component is 'slotted' into an existing control loop. Any of the other control loop components in that existing control loop component may be updated with metadata to take account of the new control loop component. A similar process may be employed to deactivate, de-instantiate, or remove an individual control loop component. For example, the control loop agent may send a request to deactivate an individual control loop component. Again, any of the other control loop components may be updated with metadata to take account of the deactivated control loop component. Thus, throughout this disclosure, any reference to deploying, instantiating, activating, monitoring, deactivating, de-instantiating, and removing a control loop is intended to include deploying, instantiating, activating, monitoring, deactivating, de-instantiating, and removing an individual component of the control loop.

Furthermore, it will be understood that the methods and techniques described herein relating to the control loop definition may apply to the file of the model. For example, to create the control loop, the control loop manager device may read the file and send control loop metadata contained in the file to control loop agents hosted on control loop components. Thus, throughout this disclosure, any reference to the control loop definition is intended to include the file of the model.

Compared to workflow-based processes, examples described herein allow control loops to be initiated to run autonomously essentially as long as needed (until de-initialization). In examples described herein, the components in a control loop are deployed and initialized to run together as a federated execution entity. In examples described herein, the lifecycle of a control loop is managed as a continuously executing federation. The lifecycle of the control loop itself (the federation) and the individual components in a control loop instance are explicitly managed.

Compared to network slicing techniques, examples described herein may be more lightweight and uniform in their approach, i.e., a single model can be used to define, deploy, and instantiate a control loop. In examples described herein, it may be straightforward to develop a participant in a control loop; once a participant implements the control loop interface it can participate in a control loop. Moreover, in contrast to network slice design, there is a mechanism for allowing the configuration of a control loop component to be embedded in a slice design time system.

Compared to conventional control loop approaches, in examples described herein the control loops are modelled in the system, i.e., there is a concept of control loop in the system. That is, the control loop model corresponds to a control loop, and this model may be used to create instances of the control loop in the network. The control loop model may allow parameters to specified, which can be given values when an instance of the control loop is created. Furthermore, there may be management of control loops in the system, with control loops properly defined as linked components. When the components are instantiated, it is possible to manage the interaction between those components as a control loop. Examples described herein allow monitoring, tracing, and state management of control loops in the system. In addition, examples described herein may provide a common way in the system for components to participate in and support control loops. During execution, a control loop may be actively managed as a whole and the control loop components within control loops may also be actively managed, so that the control loop may be managed as a federation of execution.

In summary, then, examples described herein go beyond the current control loop state of art by providing model driven flexibility, sophisticated design time capabilities, and a fully configurable and agile run-time framework for management of control loops. It goes beyond the current workflow state of the art by actively managing the control loop and its components as an executing federation.

### BRIEF DESCRIPTION OF THE DRAWINGS

Features of the present disclosure are illustrated by way of example and not limitation in the figures of the accompanying drawings, in which like numerals indicate like elements, and in which:
Figure 1 illustrates a basic control loop in a telecommunication management system;
Figure 2 illustrates how control loops are implemented in a telecommunication management system such as ONAP;
Figure 3 illustrates how control loops are instantiated in systems such as ONAP;
Figure 4 illustrates a conventional system running with ten two-stage control loops;
Figure 5 illustrates an example of a system running a control loop;
Figure 6 illustrates a control loop model;
Figure 7 illustrates a specific implementation of a control loop model;
Figure 8 illustrates a general example of how various methods and devices described herein may be implemented to design, deploy, and instantiate a control loop;
Figure 9 illustrates a specific example of how various methods and devices described herein may be implemented to design, deploy, and instantiate a control loop;
Figure 10 illustrates an example of a system in which methods and devices for monitoring for the control loop may be implemented;
Figure 11 illustrates an example of a data schema for storing control loop data in a control loop repository;
Figure 12 is a flowchart of an example method of control loop administration;
Figure 13 is a flowchart of an example method of control loop registration;
Figure 14 is a flowchart of an example method of control loop instantiation;
Figure 15 is a flowchart of an example method of control loop activation;
Figure 16 is a flowchart of an example method of control loop monitoring;
Figures 17A and 17B are flowcharts of an example of a method of passive control loop monitoring;
Figure 18 is a flowchart of an example method of control loop deactivation;
Figure 19 is a flowchart of an example method of retiring a control loop;
Figure 20 is a flowchart of an example method of removing a control loop;
Figure 21 is a block diagram of an example of a control loop manager device; and
Figure 22 is a block diagram of an example of a control loop designer device.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

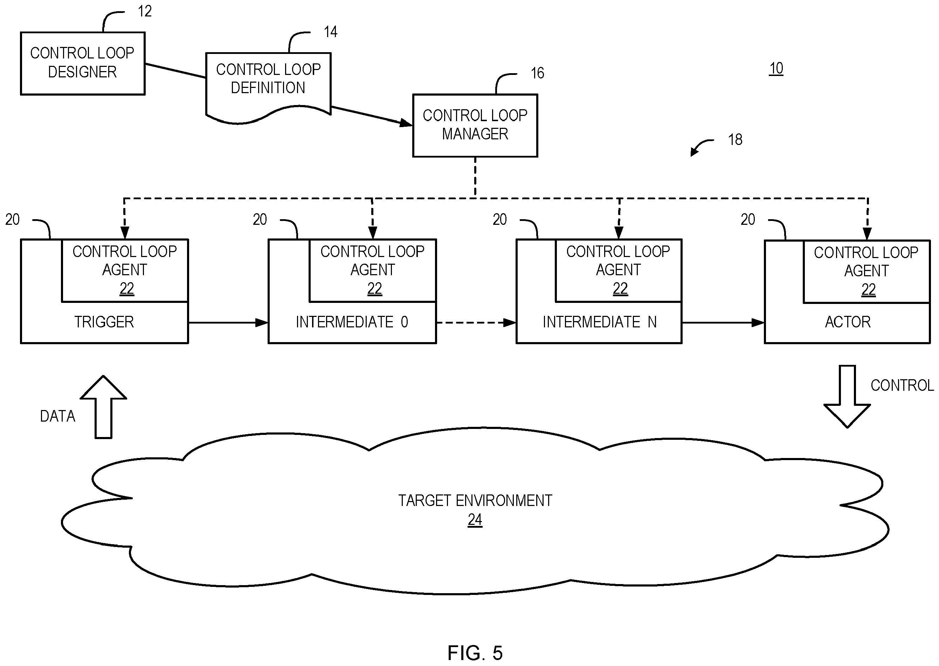

Described herein are methods and devices for composition and handling of closed control loops for telecommunication management systems. Figure 5 schematically illustrates a system 10 in which the described methods and devices may be implemented. A control loop designer 12, which may be an application running on a service designer (not shown in Figure 5), produces a control loop definition 14 comprising a structural definition of a model of a control loop. This control loop definition 14 is used by a control loop manager 16 to create an instance 18 of the control loop specified in the control loop definition 14. Each participating component (or microservice) 20 is control loop aware, and has a respective control loop agent 22 that can accept and respond to control loop commands from the control loop manager 16. In general terms, the control loop 18 examines data from target environment 24 that is being managed, to gain insights on that data, and decides what control actions (if any) should be made on the target environment 24 to improve it.

The control loop designer 12 builds the control loop definition 14, for example by building a graph of the control loop specified using a modelling language such as TOSCA. The control loop graph has information that defines each stage (trigger, intermediate components, and actor) of the control loop, including the events that pass between each stage. It also allows parameters to be specified, which may be given values when an instance of the modelled control loop is created.

The control loop manager 16 may deploy, instantiate, monitor, de-instantiate, and retire control loops. The control loop manager 16 reads the incoming control loop definition from the control loop designer 12. It can then create an instance 18 of the control loop, receiving the values for the parameters of the control loop, spinning up microservices for each component 20 if necessary, and then communicating with the control loop agent 22 on each component 20 of the control loop to build each stage of the control loop.

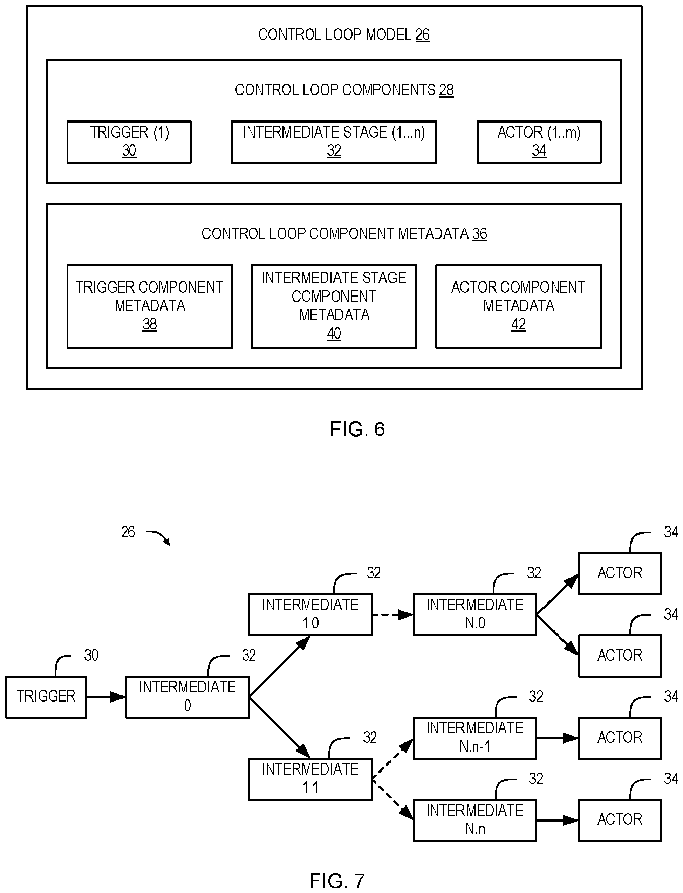

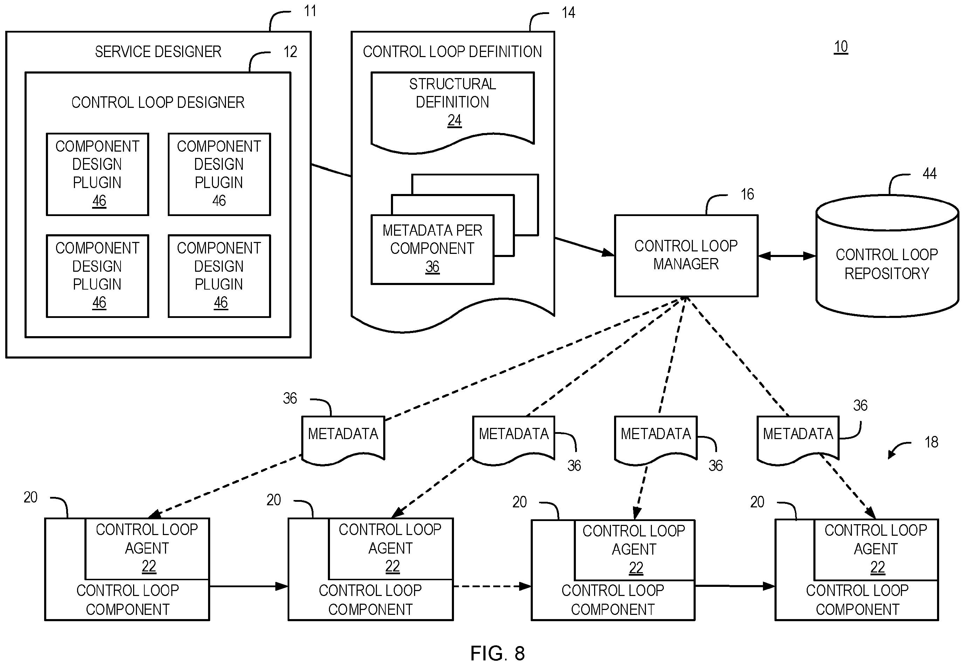

Figure 6 schematically illustrates a model 26 of a control loop that is used in example methods and devices described herein. At design time, the model 26 of the control loop is composed. The model 26 holds the structure of the control loop, i.e., the components 28 in the control loop, the order in which the components are invoked, and the messages passing between the components 28. In examples, the control loop definition that is transmitted by the control loop designer 12 to the control loop manger 16 defines such a structure of the control loop. The model 28 also contains embedded metadata 36 for each component 28, which is passed to the component when an instance of the control loop is created, as will be described in more detail with reference to Figure 8. For purposes of simplification, only components and metadata of the model are depicted in Figure 6. The control loop model 26 may be associated with a particular service, but this need not be the case.

The model 26 illustrated in Figure 6 comprises one trigger component 30, one to "n" intermediate stage components 32, and one to "m" actor components 34, as well as trigger component metadata 38, intermediate stage component metadata 40, and actor component metadata 42. It will be understood that separate metadata may be provided for components that are of the same type. Of course, some or all the components that are of the same type may have the same metadata. The metadata is information that enables the corresponding component to participate in the control loop, such as information to spin up the component, configuration data for the component, and ingress and egress event definitions for the component in the control loop. For example, for an analytics component in a control loop, the metadata may contain the name of statistic values to monitor, the algorithm for generating an insight, and the maximum frequency for which an insight is generated. Thus, control loop components effectively are resources in the system.

Figure 7 schematically illustrates an example of the model 26 shown in Figure 6 in the form of a graph. Such a graph may be created by the control loop designer 12. The graph has nodes and edges, each edge connecting two nodes, with the nodes representing components of the control loop, and the edges representing events that pass between the stages. As shown, the control loop model 26 has only one trigger component 30, but multiple intermediate components 32, and multiple actor components 34. Each component in the graph has one ingress event but may have more than one egress event. This means that the control loop proceeds from "left" to "right", backward steps in the control loop are not allowed. Each path through the graph (control loop) has a single trigger, an arbitrary number of intermediate steps, and a single actor. The control loop definition specifies the ingress and egress event of each component in the control loop.

Figure 8 illustrates a general example of how various methods and devices described herein may be implemented to design, deploy, and instantiate a control loop. As shown, a control loop designer 12 is provided in a service designer 11. The control loop designer 12 allows control loops to be developed. It supports specification of the control loop itself, and specification of the metadata for each component in the control loop, as well as the parameters that the control loop can take. A control loop developer defines a control loop and then builds up the specification of the control loop, to create a model such as the one shown in Figure 6. The control loop designer 12 may provide component plugins 46 for common components such as standard analytic, policy or action components. If additional, custom, or bespoke components are to be included in control loops, the developers of such components can add plugins to the control loop designer 12 that allow the specification and metadata of their components in the control loop designer 12.

The control loop designer 12 may be implemented as a separate graphical design tool, as an extra module in an existing graphical design tool, or as an add-on to an IDE (Integrated Development Environment) such as Eclipse.

After the control loop model has been generated, the control loop definition 14 is sent to the control loop manager 16. The control loop manager 16 validates the incoming control loop definition 14 and stores it in a control loop repository (data repository) 44. The control loop manager 16 may instantiate, monitor, and de-instantiate the control loop 18 on each component that is participating in the control loop 18. The control loop manager 16 may also can retire (or un-deploy) the control loop 18. These processes will be described in more detail below.

The control loop agents 22 provide the APIs that the control loop manager 16 acts towards. Control loop agents 22 may be implemented as a common library with a standard interface that all components use for control loop administration.

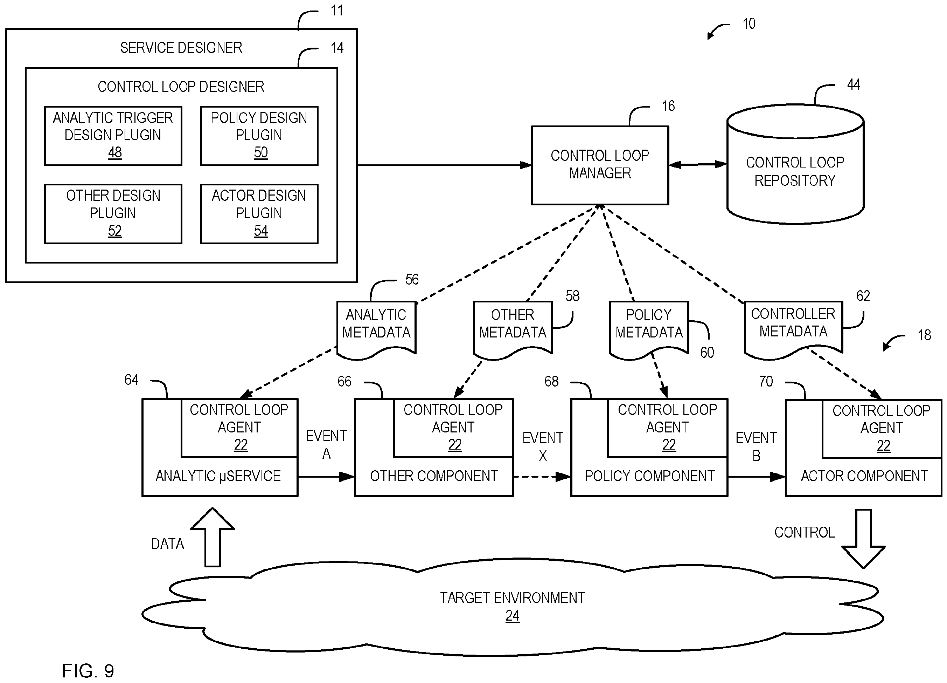

Figure 9 illustrates a specific example of how various methods and devices described herein may be implemented to design, deploy, and instantiate a control loop. As noted earlier, the control loop designer 14 is used to design the control loop, with an analytic plugin 48 and a policy plugin 50 used to specify analytic metadata 56 for the analytic component 52 and policy metadata 60 (i.e., the policy) for the policy component 68, respectively. The actor plugin 54 allows control loop specific metadata 62 to be defined for the control loop on the actor component 70. Other components 66 may also be defined for the control loop using other design plugins 52.

The control loop manager 16 instantiates the control loop 18. It spins up a new analytic microservice 64 and configures it with analytic metadata 56. It may communicate with another existing component (not shown), such as a machine learning component, passing the appropriate metadata to that component. It then passes policy metadata 60 for the control loop 18 to an existing policy component 68, and finally configures an existing actor component 70 with controller metadata 62 for the control loop 18.

Control loops may be triggered by conditions such as, but not limited to, the addition or removal of resources; insights generated by analytic, machine learning, artificial intelligence, or other algorithms; manual triggering; and timers.

Examples of intermediate components of a control loop include, but are not limited to, policies that decide whether control loop execution continues or not; analytic, machine learning, artificial intelligence, or other algorithms that enhance the insight that triggered the control loop; and bespoke or custom components.

Examples of actor components, which act on the insight of the control loop, include, but are not limited to, a variety of technology-specific controllers that send commands to the target environment; components that send notifications to human operators using email or messaging systems; and components that communicate with other systems such as CRM or trouble ticketing systems.

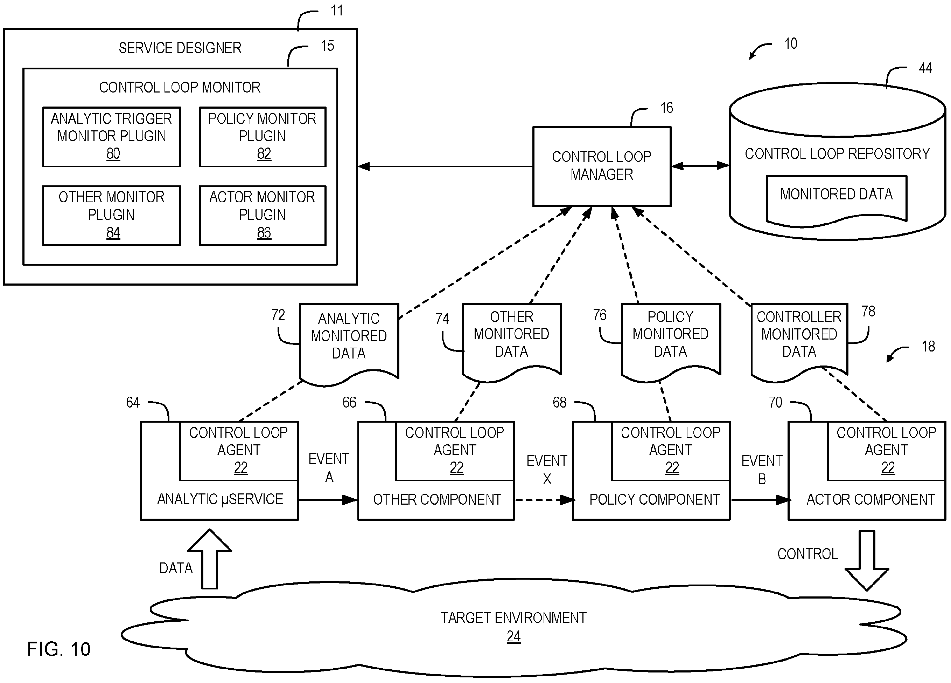

Figure 10 illustrates an example of a system in which methods and devices for monitoring for the control loop may be implemented. In general terms, each component participating in the control loop periodically sends a status message containing monitored data back to the control loop manager 16. The control loop manager 16 stores this monitored data in the repository 44. As shown, the monitored data includes analytic monitored data 72, policy monitored data 76, and controller monitored data 78, as well as other monitored 74 received from the respective control loop components.

Examples of monitored data include general information such as uptime, number of events processed, or processor load. It may also contain monitored data that can only be interpreted by a specific monitoring plugin for the component that created the monitored data.

A control loop monitor 15 can present a view of the entire control loop 18 and can present the generic information for all the components in the control loop such as its uptime, number of events processed, or processor load. Specific plugins for control loop components can be installed on the control loop monitor to interpret component specific monitored data. Thus, as shown in Figure 10, the control loop monitor 15 may include an analytic monitor plugin 80, a policy plugin 82, and an actor monitor plugin 86, to interpret monitored data from the analytic component 64, the policy component 68, and the actor component 70, respectively. If other components 66 are also present in the control loop 18, then the control loop monitor 15 may also include corresponding monitor plugins 84.

Control loops and control loop components may have the following states: "deployed", "instantiated", and "active". Deployed refers to a state in which the control loop is stored in the repository but is not instantiated on components. Instantiated refers to a state in which the control loop and its components are instantiated on running microservices, but the control loop is not handling events. Active refers to a state in which the control loop and its components are running and are handling events. These will be described in more detail below. Control loops may be modified while active or by deactivating them, re-instantiating them and reactivating them.

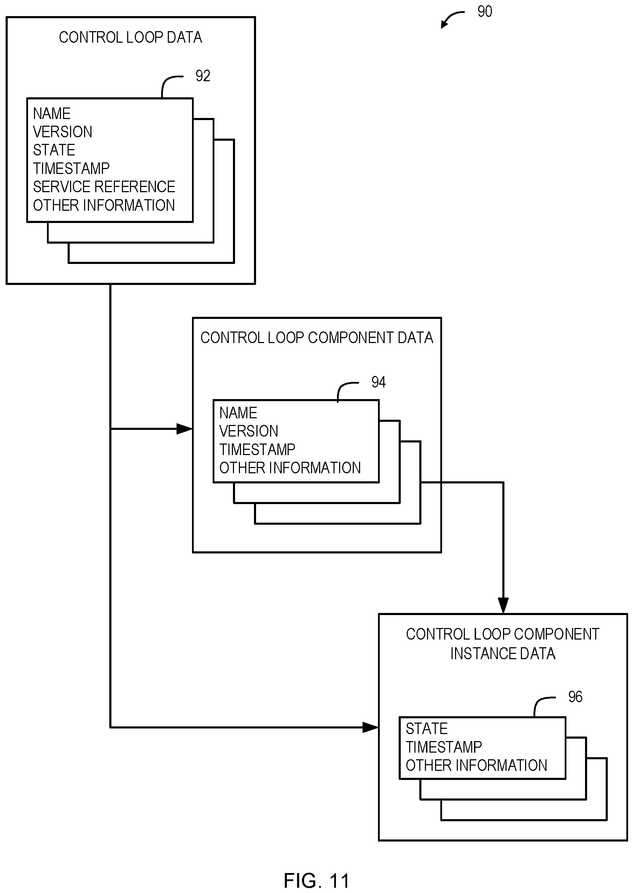

Figure 11 illustrates an example of a data schema 90 for the storage of control loop data in a control loop repository, such as control loop repository 44 shown in Figures 8 and 9. Each control loop has an entry 92 that records control loop level information such as the name and version of the control loop, its state, creation and modification timestamps, and its service reference. Each component that can participate in a control loop has an entry 94 in the control loop component table. There is also an entry 96 for each instance of the control loop component that records information on each control loop that the control loop is participating in, including the state of the control loop component in that control loop.

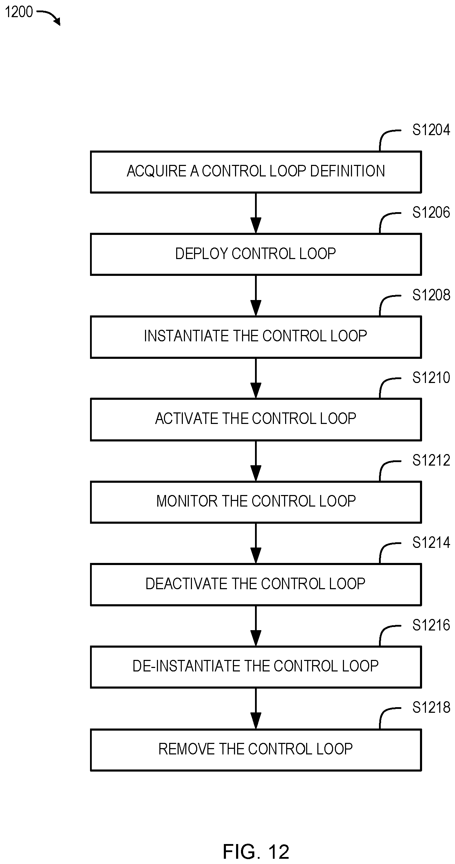

Figures 12 to 20 are flow diagrams showing how control loop administration operations are managed in the system. It should be understood that while these flow diagrams indicate particular orders of execution of operations, in some implementations, certain portions of the operations may be executed in a different order. Certain portions of the operations may be executed simultaneously. Further, in some implementations, additional operations or steps may be added to the flow diagram. Likewise, some operations or steps may be omitted. Additionally, the operations may be executed on different devices.

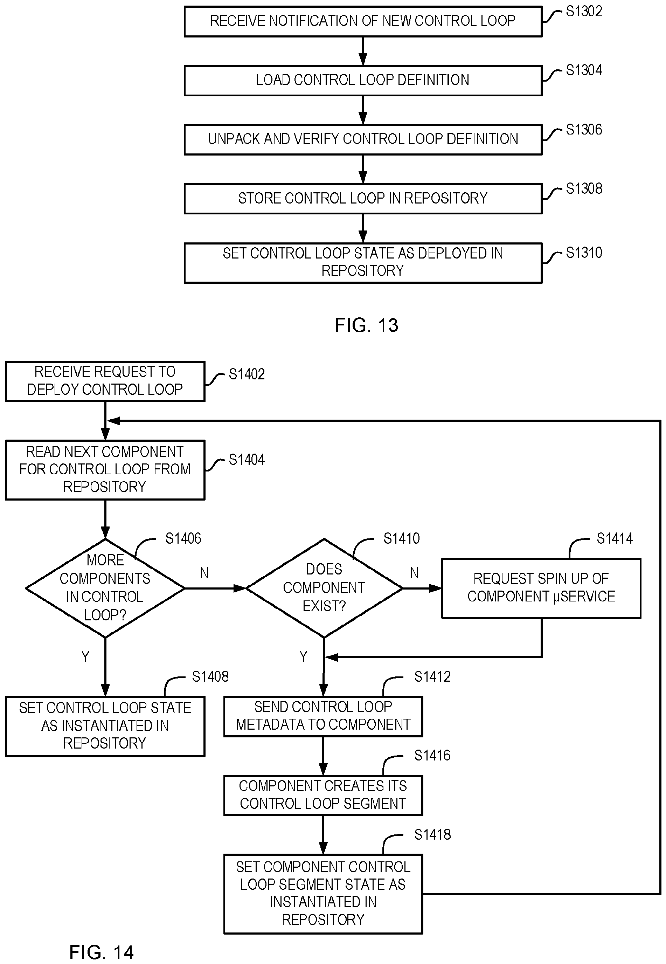

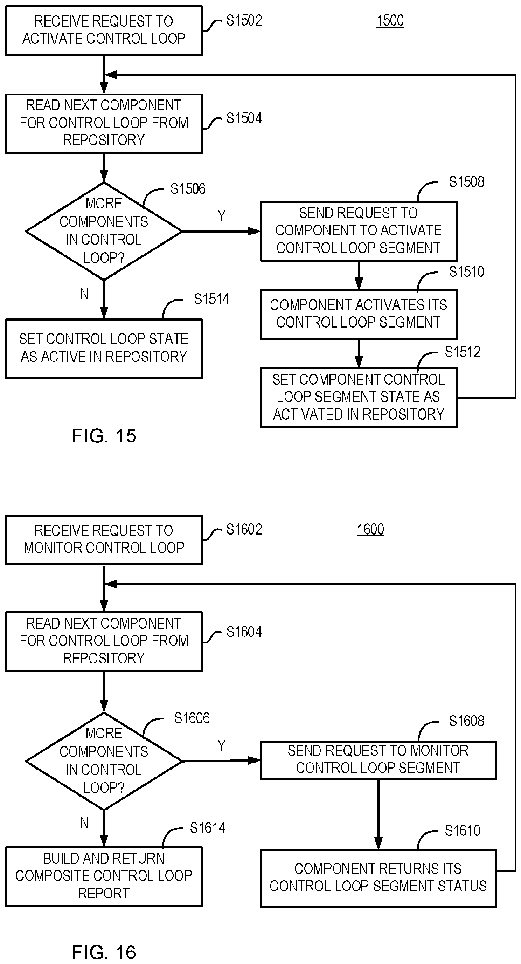

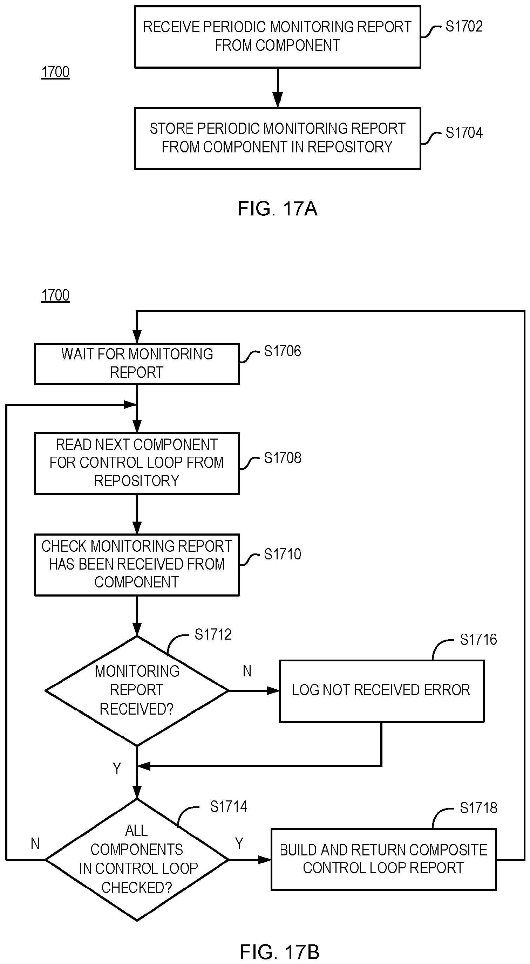

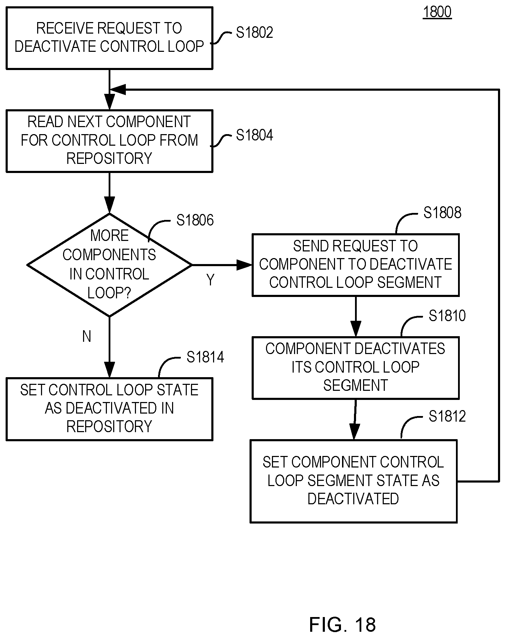

Figure 12 is a flowchart of an example method 1200 of control loop administration. At block S1204, the control loop manager 16 acquires a control loop definition. At block S1206, the control loop definition is deployed in the control repository 44, as will be described in more detail with reference to Figure 13. At block S1208, the control loop is instantiated. This is described in more detail with reference to Figure 14. At block S1210, the control loop is activated. Figure 15 illustrates an example of control loop activation in more detail. At block S1212, the control loop is monitored. Such monitoring may be active or passive, and these are described in more detail with reference to Figures 16, 17A, and 17B, respectively. At blocks S1214, S1216, and S1218, the control loop is deactivated, de-instantiated, and removed. These processes are described in more detail with reference to Figures 18, 19, and 20, respectively.

Figure 13 is a flowchart of an example method 1300 of control loop registration. At block S1302, the control loop manager receives a notification that a new control loop definition exists, for example either via an event or manual loading by a human operator. At block S1304, the control loop manager loads the definition. At block S1306, the control loop manager parses the definition and verifies that it is correct. At block S1308, the control loop manager stores the control loop in the repository using the repository schema shown in Figure 11, and at block S1310 marks the control loop as being in state "deployed".

Figure 14 is a flowchart of an example method 1400 of control loop instantiation. At block S1402, the control loop manager receives a request to instantiate a control loop. At block S1404, the control loop reads the definition of the control loop from the repository and recurses over all components in the control loop. At block S1406, the control loop checks that each component exists and if a component does not exist, it spins it up. Once the component is available, it sends the component its metadata using the control loop agent on the component. The control loop component then executes whatever operations it requires to create its control loop segment. Finally, at block S1408, the control loop manager marks the control loop as being in state Instantiated.

Figure 15 is a flowchart of an example method 1500 of control loop activation. At block S1502, the control loop manager receives a request to activate a control loop. At blocks S1504 to S1512, the control loop manager reads the definition of the control loop from the data repository and recurses over all components in the control loop. In this recursive process, at block S1508, the control loop manager sends an activation request to the component using the control loop agent on the component. Then, at block S1510, the component then executes whatever operations it requires to activate its control loop segment. The state of the component is then set to "activated" in the data repository. Finally, at block S1514, the control loop manager marks the control loop as being in state "activated" in the data repository.

Figure 16 is a flowchart of an example method 1600 of control loop monitoring. At block S1602, the control loop manager receives a request to monitor a control loop. At blocks S1604 to S1612, the control loop manager reads the definition of the control loop from the repository and recurses over all components in the control loop. In this recursive process, at block S1608, the control loop manager sends the component a monitor request using the control loop agent on the component. Then, at block S1610, the component executes whatever operations it requires to monitor its control loop segment and, at block S1612, returns the monitored information to the control loop manager. At block S1614, the control loop manager then creates a composite report for the control loop and returns it to the caller.

Figures 17A and 17B are flowcharts of an example of a method 1700 of passive control loop monitoring. At block S1702, the control loop manager receives periodic monitoring reports from components and, at block S1704, stores them in the repository. In parallel, a monitoring supervision process runs. In this process, at block S1706, the control loop manager waits for a configurable length of time (a monitoring period). When the wait ends, at blocks S1708 to S1714, the control loop manager recurses over each component in the control loop and checks if a monitoring report has been received from the component in the scan period in question. If not, an error is logged at block S1716. When all the components have been traversed a composite control loop report is compiled at block S1718.

Figure 18 is a flowchart of an example method 1800 of control loop deactivation. At block S1802, the control loop manager receives a request to deactivate a control loop. At block S1804, the control loop manager reads the definition of the control loop from the repository and, at blocks S1806 to S1812, recurses over all components in the control loop. More specially, at block S1808, the control loop manager sends the component a deactivation request using the control loop agent on the component. At block S1810, the component executes whatever operations it requires to deactivate its control loop segment. At block S1812, the state of the component is set to "deactivated" in the data repository. Finally, at block S1814, the control loop manager marks the control loop as being in state "deactivated" in the data repository.

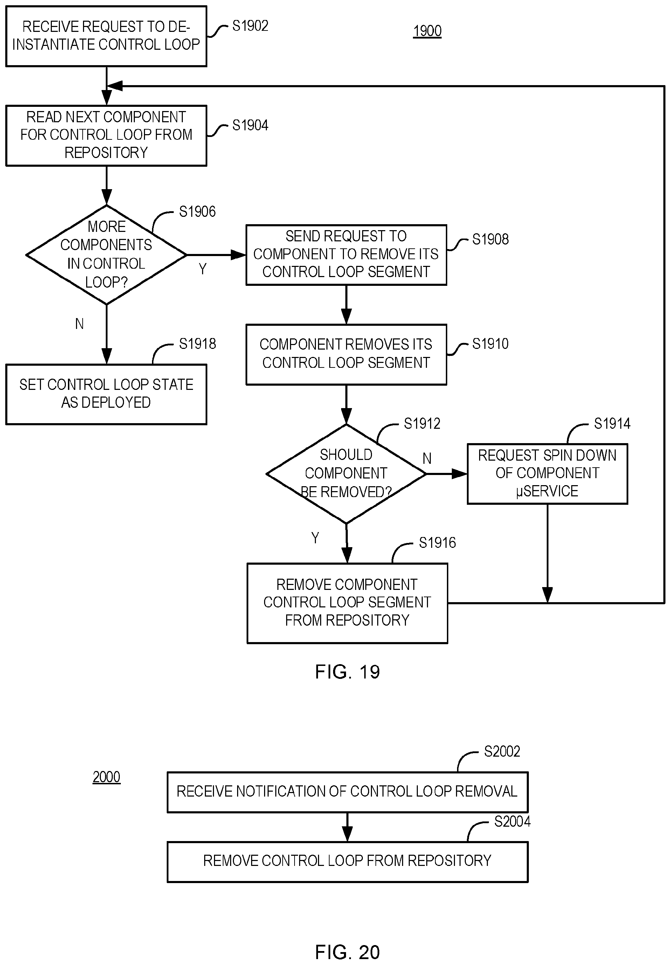

Figure 19 is a flowchart of an example method 1900 of retiring a control loop. At block S1902, the control loop manager receives a request to de-instantiate a control loop. At blocks S1904 to S1916, the control loop manager reads the definition of the control loop from the repository and recurses over all components in the control loop. More specifically, at block S1908, the control loop manager sends the component a de-instantiate request using the control loop agent on the component. At block S1910, the component then executes whatever operations it requires in order to de-instantiate its control loop segment. If the component itself should be spun down, the manager spins down the component. Finally, at block S1918, the control loop manager marks the control loop as being in the state "deployed" in the data repository. (Recall that "deployed" indicates that the control loop is stored in the data repository but not instantiated on components.)

Figure 20 is a flowchart of an example method 2000 of removing a control loop. At block S2002, the control loop manager receives a request to remove a control loop. At block S2004, the control loop manager reads the definition of the control loop from the repository and removes the control loop from the repository.

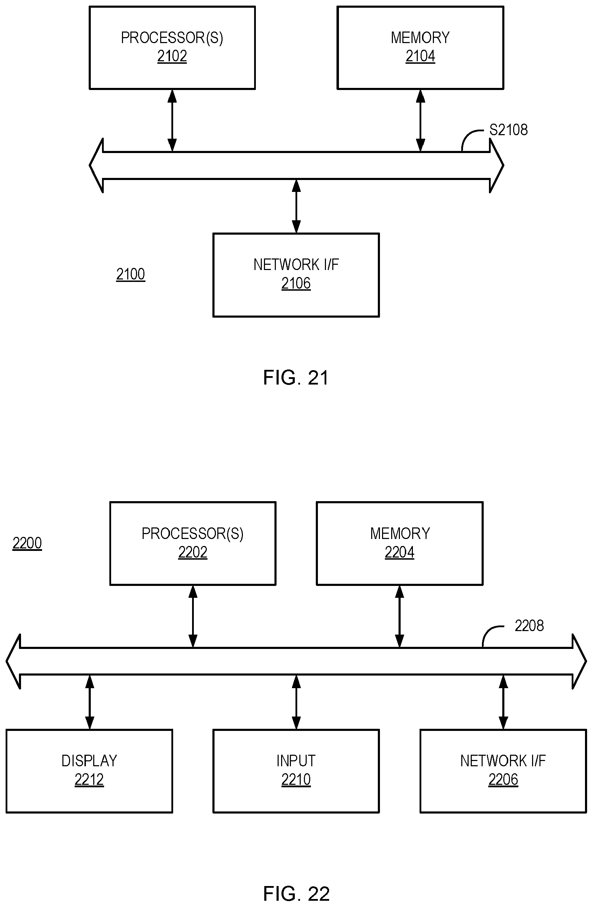

Figure 21 is a block diagram of a computing device 2100, such as a control loop manager described with reference to Figures 8 to 10, and which may be used to implement the methods described with reference to Figures 12 to 20. The computing device comprises a processor 2102, and memory 2104. The computing device also includes a network interface 2106 for communication with other computing devices, for example with the service designer, the control loop repository, and the control loop agents described with reference to Figures. 8 to 10. In some examples, the control loop repository may be stored on the computing device, i.e., on the control loop manager. The components are connectable to one another via a bus 2108.

The memory 2104 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general-purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 2102 is configured to control the computing device and execute processing operations, for example executing code stored in the memory to implement the various different methods described here and in the claims. The memory 2104 stores data being read and written by the processor 2102. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The network interface 2102 may comprise circuitry to communicate using any suitable communication protocol over any suitable communication medium (e.g., a wired medium or a wireless medium or a combination thereof). Examples include, but are not limited to, Wi-Fi 802.11a/b/g/n/ac/ad and cellular protocols such long term evolution (LTE). The network interface 2102 may be used to communicate via a local area network (LAN), a wide area network (WAN), the Internet, an intranet, a Wi-Fi network, a cellular network, and/or the like.

Figure 22 is a block diagram of a computing device, such as the service designer described with reference to Figures 8 to 10. The computing device comprises a processor 2202, and memory 2204. The computing device also includes a network interface 2206 for communication with other computing devices, for example with the control loop manager device shown in Figure 21. The memory 2204 may include a computer readable medium, as defined above.

The processor 2202 is configured to control the computing device 2200 and execute processing operations, for example executing code stored in the memory to generate a model of a control loop as described here and in the claims. The memory 2204 stores data being read and written by the processor 2202.

As shown, the computing device 2200 also has a display unit 2212 and input mechanisms (input) 2210, though these may be provided separately for example in the case were the computing device 2200 is a server. The display unit 2212 may display a representation of data stored by the computing device 2200 and may also display a cursor and dialog boxes and screens enabling interaction between a user and the programs and data stored on the computing device. The input mechanisms 2210 may enable a user to input data and instructions to the computing device. Other peripheral devices such as microphone, speakers, printer, power supply unit, fan, case, scanner, trackerball etc may be included in the computing device. The components of the computing device 2200 are connected to one another via a bus 2208.

The network interface 2206 may comprise circuitry to communicate using any suitable communication protocol over any suitable communication medium (e.g., a wired medium or a wireless medium or a combination thereof). Examples include, but are not limited to, Wi-Fi 802.11a/b/g/n/ac/ad and cellular protocols such long term evolution (LTE). The network interface 2206 may be used to communicate via a local area network (LAN), a wide area network (WAN), the Internet, an intranet, a Wi-Fi network, a cellular network, and/or the like.

The methods and devices described herein may be fully implementable in a cloud environment. For example, containers that run control loop components may be handled in the cloud environment at least in three ways: external container instantiation, container instantiation at control loop deployment time, and container instantiation at control loop instantiation time.

In external container instantiation, a control loop component shown in Figures 8, 9, and 10 is started externally and is assumed to be running by the system.

In container instantiation at control loop deployment time, a container for control loop components shown in Figures 8, 9, and 10 is started on demand when a control loop type is deployed. A single container may handle all control loops of this type, for example as threads.

In container instantiation at control loop instantiation time, a container for control loop components shown in Figures 8, 9, and 10 is started on demand when a control loop is instantiated. In this case, a separate container may be started for each control loop instance that is created.

Containers that run the control loop components and the control loop manager may all run in a single cloud environment or may be spread across many cloud environments, depending on requirements for load balancing, geographic redundancy, or other considerations.

Comparable configurations may also be implemented using virtual machines, bearing in mind that virtual machines virtualize an entire machine down to the hardware layers, whereas containers only virtualize software layers above the operating system level so that each individual container contains only the application and its libraries and dependencies. For example, a virtual machine for control loop components shown in Figures 8, 9, and 10 may be started on demand when a control loop is deployed. However, both virtual machines and containers include infrastructure such as a processor, a memory, and a network interface for implementing the methods and devices described herein.

Although examples have been described in the context of telecommunication network systems, the methods and devices described herein may also be applied more generally to other systems.

What has been described and illustrated herein is an example along with some of its variations. The terms, descriptions and figures used herein are set forth by way of illustration only and are not meant as limitations. Many variations are possible within the scope of the invention, which is intended to be defined by the following claims.

## Claims

1. A control loop manager device (16, 2100), comprising:
a processor (2102); and
a memory (2104) storing machine readable instructions that, when executed by the processor, cause the processor (2102) to:
acquire a control loop definition that includes: (i) a structural definition of a model of a control loop having a plurality of control loop components, and (ii) metadata to configure a plurality of actual control loop components (22), which correspond to the plurality of control loop components of the model, to participate in an actual control loop corresponding to the control loop of the model, and
create the actual control loop in a telecommunications management system based on the control loop definition,
wherein the instructions further cause the processor (2102) to update the actual control loop based on an updated control loop definition, wherein the update includes instantiating and activating a new control loop component in the actual control loop by transmitting metadata (36) to a control loop agent (22) hosted on the new control loop component (20).

2. The control loop manager device (16, 2100) according to claim 1, wherein to create the actual control loop, the instructions cause the processor (2102) to:
transmit the metadata to a plurality of control loop agents (22), each control loop agent (22) hosted on a respective one of the plurality of actual control loop components (20).

3. The control loop manager device (16, 2100) according to claim 2, wherein the instructions are further to cause the processor (2102) to:
transmit, to each of the control loop agents (22), a control request for controlling the respective actual control loop component (20).

4. The control loop manager device (16, 2100) according to claim 3, wherein the control request is for changing an operational state of the respective actual control loop component (20).

5. The control loop manager device (16, 2100) according to claim 3, wherein the control request is for monitoring the respective actual control loop component (20).

6. The control loop manager device (16, 2100) according to any one of the preceding claims, wherein the instructions are further to cause the processor (2102) to:
store the control loop definition in a data repository (44), together with information indicating an operational state of the control loop and/or information indicating an operational state of the control loop components.

7. A control loop system, comprising:
a control loop manager device (16, 2100) according to any one of claims 1 to 5; and
a plurality of control loop agents (22) configured to communicate with the control loop manager (16, 2100), each control loop agent (22) hosted on a respective one of the plurality of actual control loop components (20).

8. The control loop system of claim 7, wherein the actual control loop is created in a software container.

9. A computer-implemented method, comprising:
acquiring a control loop definition that includes: (i) a structural definition of a model of a control loop having a plurality of control loop components, and (ii) metadata to configure a plurality of actual control loop components, which correspond to the plurality of control loop components of the model, to participate in an actual control loop corresponding to the control loop of the model, and
creating the actual control loop in a telecommunications management system based on the control loop definition,
wherein the method further comprises updating the actual control loop based on an updated control loop definition, wherein the update includes instantiating and activating a new control loop component in the actual control loop by transmitting metadata to a control loop agent hosted on the new control loop component.

10. A computer-readable medium having stored thereon machine-readable instructions that, when executed by a processor (2102), cause the processor to perform the method of claim 9.

## Patentansprüche

1. Regelkreis-Managervorrichtung (16, 2100), umfassend:
einen Prozessor (2102); und
einen Speicher (2104), der maschinenlesbare Anweisungen speichert, die, wenn sie durch den Prozessor ausgeführt werden, den Prozessor (2102) zu Folgendem veranlassen:
Erfassen einer Regelkreisdefinition, die Folgendes beinhaltet: (i) eine Strukturdefinition eines Modells eines Regelkreises, der eine Vielzahl von Regelkreiskomponenten aufweist, und (ii) Metadaten, um eine Vielzahl von tatsächlichen Regelkreiskomponenten (22), die der Vielzahl von Regelkreiskomponenten des Modells entspricht, zu konfigurieren, um an einem tatsächlichen Regelkreis teilzunehmen, der dem Regelkreis des Modells entspricht, und
Erstellen des tatsächlichen Regelkreises in einem Telekommunikationsmanagementsystem basierend auf der Regelkreisdefinition,
wobei die Anweisungen ferner den Prozessor (2102) veranlassen, den tatsächlichen Regelkreis basierend auf einer aktualisierten Regelkreisdefinition zu aktualisieren, wobei die Aktualisierung Instanziieren und Aktivieren einer neuen Regelkreiskomponente in dem tatsächlichen Regelkreis durch Senden von Metadaten (36) an einen Regelkreisagenten (22), der auf der neuen Regelkreiskomponente (20) gehostet ist, beinhaltet.

2. Regelkreis-Managervorrichtung (16, 2100) nach Anspruch 1, wobei die Anweisungen den Prozessor (2102) zum Erstellen des tatsächlichen Regelkreises zu Folgendem veranlassen:
Senden der Metadaten an eine Vielzahl von Regelkreisagenten (22), wobei jeder Regelkreisagent (22) auf einer jeweiligen der Vielzahl von tatsächlichen Regelkreiskomponenten (20) gehostet ist.

3. Regelkreis-Managervorrichtung (16, 2100) nach Anspruch 2, wobei die Anweisungen ferner den Prozessor (2102) zu Folgendem veranlassen sollen:
Senden einer Steueranforderung zum Steuern der jeweiligen tatsächlichen Regelkreiskomponente (20) an jeden der Regelkreisagenten (22).

4. Regelkreis-Managervorrichtung (16, 2100) nach Anspruch 3, wobei die Steueranforderung dem Ändern eines Betriebszustands der jeweiligen tatsächlichen Regelkreiskomponente (20) dient.

5. Regelkreis-Managervorrichtung (16, 2100) nach Anspruch 3, wobei die Steueranforderung dem Überwachen der jeweiligen tatsächlichen Regelkreiskomponente (20) dient.

6. Regelkreis-Managervorrichtung (16, 2100) nach einem der vorhergehenden Ansprüche, wobei die Anweisungen ferner den Prozessor (2102) zu Folgendem veranlassen sollen:
Speichern der Regelkreisdefinition zusammen mit Informationen, die einen Betriebszustand des Regelkreises angeben, und/oder Informationen, die einen Betriebszustand der Regelkreiskomponenten angeben, in einem Datenspeicher (44).

7. Regelkreissystem, umfassend:
eine Regelkreis-Managervorrichtung (16, 2100) nach einem der Ansprüche 1 bis 5; und
eine Vielzahl von Regelkreisagenten (22), die dazu konfiguriert ist, mit dem Regelkreismanager (16, 2100) zu kommunizieren, wobei jeder Regelkreisagent (22) auf einer jeweiligen der Vielzahl von tatsächlichen Regelkreiskomponenten (20) gehostet ist.

8. Regelkreissystem nach Anspruch 7, wobei der eigentliche Regelkreis in einem Softwarecontainer erzeugt wird.

9. Computerimplementiertes Verfahren, umfassend:
Erfassen einer Regelkreisdefinition, die Folgendes beinhaltet: (i) eine Strukturdefinition eines Modells eines Regelkreises, der eine Vielzahl von Regelkreiskomponenten aufweist, und (ii) Metadaten, um eine Vielzahl von tatsächlichen Regelkreiskomponenten, die der Vielzahl von Regelkreiskomponenten des Modells entspricht, zu konfigurieren, um an einem tatsächlichen Regelkreis teilzunehmen, der dem Regelkreis des Modells entspricht, und
Erstellen des tatsächlichen Regelkreises in einem Telekommunikationsmanagementsystem basierend auf der Regelkreisdefinition,
wobei das Verfahren ferner Aktualisieren des tatsächlichen Regelkreises basierend auf einer aktualisierten Regelkreisdefinition umfasst, wobei die Aktualisierung Instanziieren und Aktivieren einer neuen Regelkreiskomponente in dem tatsächlichen Regelkreis durch Senden von Metadaten an einen Regelkreisagenten, der auf der neuen Regelkreiskomponente gehostet ist, beinhaltet.

10. Computerlesbares Medium, auf dem maschinenlesbare Anweisungen gespeichert sind, die, wenn sie durch einen Prozessor (2102) ausgeführt werden, den Prozessor veranlassen, das Verfahren nach Anspruch 9 auszuführen.

## Revendications

1. Dispositif de gestion de boucle de commande (16, 2100), comprenant :
un processeur (2102) ; et
une mémoire (2104) stockant des instructions lisibles par une machine qui, lorsqu'elles sont exécutées par le processeur, amènent le processeur (2102) à :
acquérir une définition de boucle de commande qui comporte : (i) une définition structurelle d'un modèle d'une boucle de commande présentant une pluralité de composants de boucle de commande, et (ii) des métadonnées pour configurer une pluralité de composants de boucle de commande réelle (22), qui correspondent à la pluralité de composants de boucle de commande du modèle, pour prendre part à une boucle de commande réelle correspondant à la boucle de commande du modèle, et
créer la boucle de commande réelle dans un système de gestion des télécommunications sur la base de la définition de boucle de commande,
dans lequel les instructions amènent en outre le processeur (2102) à mettre à jour la boucle de commande réelle sur la base d'une définition de boucle de commande mise à jour, dans lequel la mise à jour comporte l'instanciation et l'activation d'un nouveau composant de boucle de commande dans la boucle de commande réelle en transmettant des métadonnées (36) à un agent de boucle de commande (22) hébergé sur le nouveau composant de boucle de commande (20).

2. Dispositif de gestion de boucle de commande (16, 2100) selon la revendication 1, dans lequel, pour créer la boucle de commande réelle, les instructions amènent le processeur (2102) à :
transmettre les métadonnées à une pluralité d'agents de boucle de commande (22), chaque agent de boucle de commande (22) étant hébergé sur un composant respectif de la pluralité de composants de boucle de commande réelle (20).

3. Dispositif de gestion de boucle de contrôle (16, 2100) selon la revendication 2, dans lequel les instructions amènent en outre le processeur (2102) à :
transmettre, à chacun des agents de boucle de commande (22), une demande de commande pour commander le composant de boucle de commande réelle respectif (20).

4. Dispositif de gestion de boucle de commande (16, 2100) selon la revendication 3, dans lequel la demande de commande est destinée à modifier un état opérationnel du composant de boucle de contrôle réelle respectif (20).

5. Dispositif de gestion de boucle de commande (16, 2100) selon la revendication 3, dans lequel la demande de commande est destinée à surveiller le composant de boucle de commande réelle respectif (20) .

6. Dispositif de gestion de boucle de commande (16, 2100) selon l'une quelconque des revendications précédentes, dans lequel les instructions amènent en outre le processeur (2102) à :
stocker la définition de boucle de commande dans un référentiel de données (44), ainsi que des informations indiquant un état opérationnel de la boucle de commande et/ou des informations indiquant un état opérationnel des composants de la boucle de commande.

7. Système de boucle de commande, comprenant :
un dispositif de gestion de boucle de commande (16, 2100) selon l'une quelconque des revendications 1 à 5 ; et
une pluralité d'agents de boucle de commande (22) configurés pour communiquer avec le dispositif de gestion de boucle de commande (16, 2100), chaque agent de boucle de commande (22) étant hébergé sur un composant respectif de la pluralité de composants de boucle de commande réelle (20).

8. Système de boucle de commande selon la revendication 7, dans lequel la boucle de commande réelle est créée dans un conteneur de logiciel.

9. Procédé mis en œuvre par ordinateur comprenant :
l'acquisition d'une définition de boucle de commande qui comporte : (i) une définition structurelle d'un modèle d'une boucle de commande présentant une pluralité de composants de boucle de commande, et (ii) des métadonnées pour configurer une pluralité de composants de boucle de commande réelle, qui correspondent à la pluralité de composants de boucle de commande du modèle, pour prendre part à une boucle de commande réelle correspondant à la boucle de commande du modèle, et
la création de la boucle de commande réelle dans un système de gestion des télécommunications sur la base de la définition de boucle de commande,
dans lequel le procédé comprend en outre la mise à jour de la boucle de commande réelle sur la base d'une définition de boucle de commande mise à jour, dans lequel la mise à jour comporte l'instanciation et l'activation d'un nouveau composant de boucle de commande dans la boucle de commande réelle par transmission de métadonnées à un agent de boucle de commande hébergé sur le nouveau composant de boucle de commande.

10. Support lisible par ordinateur sur lequel sont stockées des instructions lisibles par une machine qui, lorsqu'elles sont exécutées par un processeur (2102), amènent le processeur à mettre en œuvre le procédé de la revendication 9.
